# EUROPÄISCHE PATENTSCHRIFT

(11) **EP 3 120 338 B1**
(45) Veröffentlichungstag und Bekanntmachung des Hinweises auf die Patenterteilung: **11.04.2018**
(21) Anmeldenummer: 15703875.3
(22) Anmeldetag: 06.02.2015
(51) Int. Cl.: G08G 1/00

(54) **STEUERGERÄT IN EINEM KRAFTFAHRZEUG, KRAFTFAHRZEUG UND VERFAHREN ZUR NOTFALLKOMMUNIKATION**
CONTROLLER IN A MOTOR VEHICLE, MOTOR VEHICLE AND METHOD FOR EMERGENCY COMMUNICATION
APPAREIL DE COMMANDE DANS UN VÉHICULE AUTOMOBILE, VÉHICULE AUTOMOBILE ET PROCÉDÉ DE COMMUNICATION D'URGENCE

(30) Priorität: 20.03.2014 DE 102014003945
(43) Veröffentlichungstag der Anmeldung: 25.01.2017
(73) Patentinhaber: Audi AG, 85045 Ingolstadt (DE)
(72) Erfinder: KULNICK, Sascha, 85119 Buxheim (DE); SEEMANN, Volker, 85049 Ingolstadt (DE); LANGER, Niels-Stefan, 30559 Hannover (DE)
(86) Internationale Anmeldenummer: PCT/EP2015/000248
(87) Internationale Veröffentlichungsnummer: WO 2015/139800

(56) Entgegenhaltungen:
- EP-A1- 2 128 841
- EP-A2- 2 127 964
- US-A- 4 717 904
- US-A1- 2005 096 007

## Beschreibung

Die Erfindung betrifft ein Steuergerät in einem Kraftfahrzeug, aufweisend eine Kommunikationseinrichtung zur drahtlosen Kommunikation in einem Mobilfunknetz, eine Anschlusseinrichtung an wenigstens ein Bussystem des Kraftfahrzeugs und eine Recheneinrichtung zur Steuerung des Datenaustauschs zwischen dem wenigstens einen Bussystem und dem Mobilfunknetz und/oder einem über das Mobilfunknetz erreichbaren externen Netzwerk, insbesondere dem Internet. Daneben betrifft die Erfindung ein Kraftfahrzeug und ein Verfahren zur Notfallkommunikation in einem Kraftfahrzeug.

Bei modernen Kraftfahrzeugen wird es immer üblicher, diese auch an externe Netze anzubinden, insbesondere an das Internet. Auf diese Weise können nicht nur Komfortfunktionen realisiert werden, sondern auch mit der Führung des Kraftfahrzeugs in unmittelbarer Verbindung stehende, aktuelle Informationen abgerufen werden, beispielsweise was den Straßenzustand, Wetterverhältnisse und dergleichen angeht. Dabei wird die Verbindung in das Internet meist über ein Mobilfunknetz hergestellt.

Um eine solche "Onlineverbindung" zu einem externen Netzwerk zu realisieren, ist es bekannt, ein Steuergerät vorzusehen, das beispielsweise als "Online Connectivity Unit" (OCU) bezeichnet werden kann. In einem solchen Steuergerät oder an dieses angeschlossen kann auch eine Kommunikationseinrichtung vorliegen, welche beispielsweise als ein Telefonmodul mit einer Antenne und entsprechender Elektronik realisiert sein kann. Derartige Kommunikationsmodule werden häufig auch als "Network Access Device" (NAD) bezeichnet. Eine Verbindung zu anderen Fahrzeugsystemen ausgehend von dem Steuergerät wird über ein Bussystem des Kraftfahrzeugs realisiert, wobei moderne Kraftfahrzeuge häufig mehrere Fahrzeugbusse (Bussysteme) aufweisen. Das Steuergerät weist üblicherweise mithin eine Verbindung zu einem dieser Bussysteme auf, um aus dem Netzwerk empfangene Daten an andere Fahrzeugsysteme übermitteln zu können oder von diesen an das Netzwerk gerichtete Daten zu empfangen und an die Kommunikationseinrichtung weiterzuleiten.

Ein von der Europäischen Union geplantes automatisches Notrufsystem für Kraftfahrzeuge ist unter dem Namen "eCall" (kurz für "Emergency Call") bekannt. In diesem Zusammenhang ist vorgesehen, im Fahrzeug zusätzliche Steuergeräte zu verwenden, die in einem Notfall, beispielsweise bei einem Verkehrsunfall, automatisch ein Notrufsignal an die einheitliche europäische Notrufnummer 112 melden. Zusätzlich hierzu wurden Notrufsysteme vorgeschlagen, die unter dem Stichwort des "privaten Notrufs" bekannt sind. Hierbei erfolgt der Anruf nicht unmittelbar bei der Notrufnummer, sondern in einem Callcenter, in dem beispielsweise Mitarbeiter mit verschiedenen Sprachfähigkeiten und dergleichen für die Anrufer bereitstehen und diese telefonisch über eine Sprachverbindung betreuen. Ein weiterer Mitarbeiter des Callcenters gibt die Informationen an die offizielle Notrufnummer weiter und setzt so die Rettungskette in Gang. Auch für solche privaten Notrufsysteme wurden spezielle Steuergeräte vorgeschlagen.

Allgemein nutzen diese speziellen, zusätzlichen Steuergeräte eine ohnehin im Kraftfahrzeug, beispielsweise im Bereich einer Scheibe, verbaute Mobilfunkantenne, um das Notrufsignal auszusenden und gegebenenfalls die Sprachverbindung zu dem Callcenter oder der offiziellen Notrufnummer aufzubauen. Eine derartige Mobilfunkantenne kann beispielsweise an einem Scheibenwurzeldisplay angeordnet sein.

Weder im Hinblick auf die Funktionssicherheit noch im Hinblick auf Bauraum und Kosten wirkt eine derartige Lösung optimal. Fällt beispielsweise bei einem Verkehrsunfall die nach außen gelegene Mobilfunkantenne aus, wäre ein Absenden des Notrufsignals nicht mehr möglich; dasselbe gilt bei einem Ausfall der elektrischen Energie im Kraftfahrzeug und dergleichen.

Dokument EP 2 128 841 A1 betrifft eine Telematikeinrichtung für ein Fahrzeug. Bereits aus der Beschreibung des Hintergrunds der dortigen Erfindung geht hervor, dass es sich bei den dortigen Telematikanwendungen um einen Datentransport aus dem Kraftfahrzeug heraus zu einem externen Empfänger handelt. Entsprechend wird für die dortige Telematikeinrichtung vorgeschlagen, telematische Daten von verschiedenen Sensoren zu sammeln und in einer zentralen Prozessoreinheit (CPU) zu verarbeiten, bevor sie weitergeleitet werden können. Die Daten werden durch Mittel zur internen Kommunikation empfangen und entweder nicht weiterverarbeitet oder weiterverarbeitet durch die Steuerprozessormittel weitergeleitet. Die interne Kommunikation kann über einen Bus erfolgen, wobei zur Weiterleitung von Telematikdaten an eine Position außerhalb des Kraftfahrzeugs ein drahtloser Kontroller für die Langreichweitenkommunikation genutzt werden kann, insbesondere umfassend einen Transceiver für Mobilfunkkommunikation, der mit einer (internen) Hochfrequenzantenne verbunden ist.

Der Erfindung liegt daher die Aufgabe zugrunde, eine demgegenüber verbesserte Notruffunktionalität im Kraftfahrzeug zu realisieren.

Zur Lösung dieser Aufgabe ist bei einem Steuergerät der eingangs genannten Art erfindungsgemäß vorgesehen, dass die Kommunikationseinrichtung neben einem Anschluss zu einer steuergerätexternen Mobilfunkantenne eine in dem Steuergerät integrierte, bei Ausfall der steuergerätexternen Mobilfunkantenne zu verwendenden Zusatzmobilfunkantenne aufweist und zum Aussenden eines Notrufsignals in das Mobilfunknetz bei Erhalt eines Notfalltriggersignals über das Bussystem und/oder eine sonstige Kommunikationsverbindung ausgebildet ist.

Die Erfindung schlägt mithin zum einen vor, ein bereits im Kraftfahrzeug vorgesehenes, ohnehin zur Herstellung einer Verbindung zu dem Mobilfunknetz ausgebildetes Steuergerät dahingehend zu modifizieren, dass auch eine Notfallkommunikationsfunktionalität, insbesondere eine private Ntruf-Funktionalität und/oder eCall-Funktionalität, hierüber gegeben ist. Zum anderen aber wird dieses ohnehin vorhandene Steuergerät, beispielsweise eine OCU - Online Connectivity Unit - um eine Zusatzmobilfunkantenne ergänzt, die herangezogen werden kann, wenn die eigentliche Mobilfunkantenne des Kraftfahrzeugs, die steuergerätextern angeordnet ist, nicht zur Verfügung steht. Durch die erste Maßnahme wird eine höhere Integration innerhalb des Kraftfahrzeugs erreicht, indem neue, zusätzliche Hardware weitgehend vermieden wird und Bauraum und Kosten eingespart werden können. Mit der Nutzung des Steuergeräts, welches das Kraftfahrzeug ohnehin an externe Netzwerke, insbesondere das Internet, anbinden soll, wird eine Baueinheit verwendet, die ohnehin meist in einem möglichst crashsicheren Bereich des Kraftfahrzeugs angeordnet ist, so dass auch diesbezüglich ein Beitrag zur Erhöhung der Sicherheit gegeben ist.

Die zweite, mit der ersten Maßnahme in unmittelbarem Zusammenhang stehende Maßnahme betrifft das Vorsehen der Zusatzmobilfunkantenne. Während zwar im Inneren des Kraftfahrzeugs, insbesondere im Inneren der Fahrgastzelle, die Empfangsbedingungen schlechter sind als beispielsweise benachbart einer Scheibe des Kraftfahrzeugs, wo häufig die steuergerätexternen Mobilfunkantennen angeordnet sein werden, ist es jedoch dennoch möglich, über eine günstige Antenne, die keine zu hohen Anforderungen an die Übertragungsqualität stellt, noch ein Notrufsignal auszusenden und mithin bei einem Notfall, insbesondere einem Unfall, eine schnellstmögliche Benachrichtigung der Rettungskräfte, insbesondere über den Zwischenschritt eines Callcenters bei einem privaten Notrufsystem, auch dann sicherzustellen, wenn insbesondere durch Beschädigung des Kraftfahrzeugs die steuergerätexterne Mobilfunkantenne nicht mehr zur Verfügung steht. Dabei ist, wie bereits erwähnt, das Vorsehen einer solchen Zusatzmobilfunkantenne, die nicht den Qualitätsanforderungen der steuergerätexternen Mobilfunkantenne entsprechen muss, problemlos und günstig möglich.

Zusammenfassend bietet die vorliegende Erfindung mithin eine doppelte Nutzung eines Steuergeräts, einmal zum Herstellen einer Verbindung zu einem Netzwerk, zum anderen aber zum Realisieren einer Notfallkommunikation, wobei das Steuergerät vorzugsweise crashsicher verbaut ist. Nachdem auch eine Notfall-Mobilfunkantenne in Form der Zusatzmobilfunkantenne unmittelbar im Steuergerät vorliegt, sind die wesentlichen benötigten Komponenten gekapselt im crashsicheren Bereich vorhanden, um die Notfallkommunikation zu ermöglichen.

Dieser Gedanke kann zweckmäßig noch weiter fortgeführt werden, wenn das Steuergerät ferner eine bei einem Ausfall einer externen Energieversorgung zu verwendende Energiequelle, insbesondere eine Batterie, aufweist. Dann ist auch bei einem Ausfall der sonstigen elektrischen Energieversorgung des Kraftfahrzeugs noch das Aussenden eines Notrufsignals möglich, da eine nur im Notfall einzusetzende Energieversorgung in das Steuergerät integriert ist. Bei der Energiequelle handelt es sich bevorzugt um eine Batterie, insbesondere einen Akkumulator. Insgesamt ist auf diese Weise letztlich ein autarkes Steuergerät für die Notfallkommunikation geschaffen, welches zusätzlich als Schnittstelle des Kraftfahrzeugs zu einem kraftfahrzeugexternen Netzwerk, insbesondere dem Internet, dient.

Eine vorteilhafte Weiterbildung der vorliegenden Erfindung sieht vor, dass das Steuergerät auch eine insbesondere zusätzlich zu einer weiteren GPS-Antenne des Kraftfahrzeugs vorgesehene, mit der Kommunikationseinrichtung verbundene GPS-Zusatzantenne aufweist. Diese Ausgestaltung ist sowohl zweckmäßig, wenn das Kraftfahrzeug bislang noch keine Möglichkeit zur Positionsbestimmung über GPS enthielt, welche eine nützlicherweise in dem Notrufsignal zu integrierende Positionsinformation ableitbar macht. Doch auch in Fällen, in denen das Kraftfahrzeug bereits mit einer weiteren GPS-Antenne versehen ist, kann das Vorsehen einer GPS-Zusatzantenne in dem Steuergerät zweckmäßig sein, nachdem auch für die weitere GPS-Antenne des Kraftfahrzeugs, die steuergerätextern vorliegt, wie bei der Mobilfunkantenne ein Ausfall oder eine Nichterreichbarkeit auftreten kann.

Allgemein kann vorgesehen sein, dass bei einer in dem Steuergerät integrierten GPS-Zusatzantenne und/oder bei über das Bussystem erhaltenen Positionsdaten die Kommunikationseinrichtung zur Ermittlung und Aussendung eines eine Positionsinformation des Kraftfahrzeugs enthaltenden Notrufsignal ausgebildet ist. Weist das Kraftfahrzeug beispielsweise ein Navigationssystem oder ein sonstiges Fahrzeugsystem auf, welches ohnehin über die weitere GPS-Antenne Positionsdaten des Kraftfahrzeugs bestimmt, können diese über das Bussystem an das Steuergerät weitergeleitet und dort entsprechend in das Notrufsignal integriert werden, da die Positionsinformation eine äußerst wichtige Zusatzinformation für die Rettungskräfte darstellt, um den Ort des Unfalls bzw. des Notfalls möglichst schnell zu erreichen. Fällt diese Datenquelle aus oder ist eine GPS-Antenne ohnehin nur innerhalb des Steuergeräts vorgesehen, kann auch die GPS-Zusatzantenne des Steuergeräts genutzt werden, um eine Positionsbestimmung durchzuführen und die Positionsinformation dem Notrufsignal zuzufügen, was die unabhängige Funktion des Steuergeräts auch weiterhin sicherstellt.

Mithin ist ein Steuergerät mit einer eigenen Energiequelle, einer GPS-Zusatzantenne und einer Zusatzmobilfunkantenne eine besonders bevorzugte Ausführungsform, da das Steuergerät dann autark wesentliche Informationen generieren und das Notrufsignal zusammenstellen und aussenden kann.

Neben einer Positionsinformation können in dem Notrufsignal selbstverständlich auch weitere nützliche Informationen enthalten sein, beispielsweise Informationen zur Unfallschwere, zum Funktionsstatus der Türen bzw. ob diese verschlossen sind oder nicht, die Fahrtrichtung zum Zeitpunkt des Notfalls, eine Identifikation des Kraftfahrzeugs und dergleichen.

Vorzugsweise kann die Kommunikationseinrichtung einen Anschluss für ein steuergeräteexternes Mikrofon und/oder einen steuergeräteexternen Lautsprecher aufweisen und zur Herstellung einer Sprechverbindung mit einer privaten und/oder offiziellen Notrufnummer mit Aussenden des Notrufsignals ausgebildet sein. Eine private Notrufnummer kann dabei beispielsweise einem Callcenter zugeordnet sein. Dabei kann die Kommunikationseinrichtung zweckmäßigerweise eine Verstärkereinheit aufweisen, die dem Lautsprecher vorgeschaltet ist, um eine hinreichende Ausgabelautstärke im Kraftfahrzeug zu ermöglichen. Während es grundsätzlich denkbar ist, ein Mikrofon und einen Lautsprecher auch in das Steuergerät selbst zu integrieren, ist dies weniger bevorzugt, nachdem der Verbauort dies in den meisten Fällen als eine ungünstige Anordnung erscheinen lassen wird. Mithin werden steuergerätexterne Mikrofone und Lautsprecher verwendet, wobei durchaus vorgesehen sein kann, dass als Lautsprecher und Mikrofon bereits in dem Kraftfahrzeug vorgesehene Einrichtungen verwendet werden. Soll eine unabhängige Funktionsweise des Steuergeräts sichergestellt werden, kann es zweckmäßig sein, den Lautsprecher und das Mikrofon ausschließlich dem Steuergerät zuzuordnen, mithin gegebenenfalls für das Steuergerät einen zusätzlichen Lautsprecher und ein zusätzliches Mikrofon hinzuzufügen.

Das Steuergerät ist ein Vernetzungssteuergerät mit der Anschlusseinrichtung an mehrere, bevorzugt alle, zur Kommunikation zwischen unterschiedlichen Fahrzeugsystemen vorgesehenen Bussysteme und der zur Steuerung des Austauschs von Daten zwischen den Bussystemen und zwischen den Bussystemen und dem Netzwerk ausgebildeten Recheneinrichtung. Auf diese Weise wird durch das Steuergerät mithin auch ein "Routing" zwischen unterschiedlichen Bussystemen des Kraftfahrzeugs durchgeführt, wobei derartige Vernetzungssteuergeräte auch als "Gateway" bekannt sind. Die Notfallkommunikationsfunktionalität wird in dieser Ausgestaltung mithin an einem zentralen Kommunikations-Knotenpunkt des Kraftfahrzeugs hinzugefügt, so dass die Integration weiter erhöht werden kann. Insbesondere kann dann auch eine in dem Steuergerät realisierte Notfallkommunikationseinheit Informationen von mehreren Bussystemen gezielt erhalten, beispielsweise Positionsdaten von einem Navigationssystem und dergleichen.

Hierzu kommen die Vorteile einer Integration von dem Vernetzungssteuergerät und der Anbindung an das externe Netzwerk, beispielsweise, dass eine Anbindung an bevorzugt alle Fahrzeugbusse vorliegt und mithin Daten aus dem Netzwerk unmittelbar auf das Ziel-Bussystem gegeben werden können. Es ist mithin eine breitbandige Anbindung gegeben. Würde ein spezielles, nur an ein einziges Bussystem, beispielsweise einen CAN-Bus, angeschlossenes Steuergerät verwendet, müsste der gesamte Verkehr zu dem und von dem externen Netzwerk über dieses eine Bussystem laufen, welches zu stark ausgelastet würde, nachdem die meisten Bussysteme in ihrer Bandbreite begrenzt sind. Besteht Kommunikationsbedarf zwischen dem externen Netzwerk und einem anderen Bussystem, wären bei einem nur an ein Bussystem angeschlossenen Steuergerät zwei Fahrzeugbusse "wach" zu halten, so dass ein höherer Ruhestrom gegeben wäre. Bei der hier vorgestellten integrierten Lösung ist mithin ein besseres Ruhestromverhalten zu erreichen. Die Integration bietet zudem ein monetäres Einsparpotential, nachdem bestimmte Hardwarebestandteile nicht mehr benötigt werden.

Eine zweckmäßige Weiterbildung sieht vor, dass die Recheneinrichtung und die Kommunikationseinrichtung über eine SPI-Verbindung und/oder eine USB-Verbindung und/oder eine speziell für diesen Zweck vorgesehene Notfallverbindung zur Übertragung eines Notfalltriggersignals an die Kommunikationseinrichtung verbunden sind. Besonders bevorzugt ist es dabei, wenn zum einen eine Datenverbindung zwischen der Recheneinrichtung und der Kommunikationseinrichtung besteht, beispielsweise eine SPI-Verbindung, aber zusätzlich auch eine Notfallverbindung als eigene, separierte Leitung vorliegt, die allein dem Zweck dient, das Notfalltriggersignal an die Kommunikationseinrichtung weiterzugeben, welche entsprechend das Notrufsignal aussenden kann. In diesem Fall ist eine instantane Übertragung auch dann gesichert, wenn bei der Datenverbindung ein Puffersystem oder dergleichen eingesetzt wird, so dass die Funktionssicherheit der Notfallkommunikation weiter erhöht wird.

Neben dem Steuergerät betrifft die Erfindung auch ein Kraftfahrzeug, umfassend ein Steuergerät nach einem der vorangehenden Ansprüche, die Mobilfunkantenne und das wenigstens eine Bussystem. Sämtliche Ausführungen bezüglich des erfindungsgemäßen Steuergeräts lassen sich analog auf das erfindungsgemäße Kraftfahrzeug übertragen, mit welchem ebenso die genannten Vorteile erhalten werden können. Das bedeutet, dass das Kraftfahrzeug selbstverständlich auch die weitere GPS-Antenne, das Mikrofon und den Lautsprecher aufweisen kann, wenn Derartiges vorgesehen ist.

Eine besonders bevorzugte Ausgestaltung sieht zudem vor, dass das Steuergerät in einem crashsicheren Bereich des Kraftfahrzeugs angeordnet ist, insbesondere im Bereich der Fahrgastzelle, bevorzugt unterhalb einer Rücksitzbank. Auf diese Weise wird die Notfallkommunikationsfunktionalität durch ein Steuergerät realisiert, welches sich in einem bei Unfällen möglichst geschützten Bereich befindet, so dass die Funktionalität zu einem möglichst hohen Grade auch bei schwereren Unfällen sichergestellt werden kann. Vom Bauraum her bietet sich insbesondere eine Anordnung unterhalb einer Rücksitzbank an, wobei selbstverständlich auch andere Positionen innerhalb der meist besonders crashsicher realisierten Fahrgastzelle denkbar sind.

Das Kraftfahrzeug kann ferner ein insbesondere von einem Fahrersitz aus erreichbares Notfallbedienelement und/oder eine Sicherheitsüberwachungseinrichtung zur Erzeugung eines Notfalltriggersignals für die Kommunikationseinrichtung aufweisen. Während es mithin zum einen denkbar ist, dass das Notfalltriggersignal bei Betätigung eines Notfallbedienelements, beispielsweise eines SOS-Knopfes, ausgelöst und an die Kommunikationseinrichtung im Steuergerät übertragen wird, ist üblicherweise alternativ oder bevorzugt zusätzlich zu dem Notfallbedienelement eine Sicherheitsüberwachungseinrichtung vorgesehen, die überprüft, ob ein Notfall vorliegt und das Notfalltriggersignal im Fall eines Notfalls an das Steuergerät ausgibt. Die Sicherheitsüberwachungseinrichtung kann beispielsweise überprüfen, ob eine Kollision des Kraftfahrzeugs mit einem anderen Objekt stattgefunden hat und/oder ob Sicherheitssysteme ausgelöst wurden, beispielsweise Airbags gezündet, Gurtstraffer aktiviert und dergleichen.

In diesem Zusammenhang ist es besonders zweckmäßig, wenn das Notfallbedienelement und/oder die Sicherheitsüberwachungseinrichtung durch eine speziell für diesen Zweck vorgesehene Kommunikationsverbindung, insbesondere eine Signalleitung, mit dem Steuergerät verbunden ist. In diesem Fall muss die Kommunikationsfähigkeit über Bussysteme nicht mehr zwangsläufig bestehen, um das Notfalltriggersignal korrekt zu übermitteln, was die Robustheit der Funktion bei Unfällen weiter erhöht.

Schließlich betrifft die Erfindung auch ein Verfahren zur Notfallkommunikation in einem Kraftfahrzeug, bei dem ein erfindungsgemäßes Steuergerät verwendet wird. Dieses Verfahren zeichnet sich dadurch aus, dass bei Erhalt eines Notfalltriggersignals überprüft wird, ob eine zu dem Steuergerät externe Mobilfunkantenne erreichbar ist, wobei bei nicht erreichbarer externer Mobilfunkantenne die Zusatzmobilfunkantenne zur Übermittlung eins Notrufsignals an eine private und/oder offizielle Notrufnummer verwendet wird. Selbstverständlich gelten die Ausführungen zum erfindungsgemäßen Steuergerät und zum erfindungsgemäßen Kraftfahrzeug auch hier fort. Fällt mithin die hauptsächlich genutzte, eine hohe Qualität zur Verfügung stellende Mobilfunkantenne des Kraftfahrzeugs aus, kann die Zusatzmobilfunkantenne, die in dem Steuergerät integriert ist, genutzt werden, um dennoch ein Notrufsignal auszusenden.

Eine derartige Überprüfung kann auch stattfinden, wenn in dem Steuergerät eine GPS-Zusatzantenne vorliegt und das Kraftfahrzeug eine weitere GPS-Antenne aufweist. Liefert die entsprechende steuergerätexterne Datenquelle keine Positionsdaten, kann die im Steuergerät integrierte GPS-Zusatzantenne genutzt werden, um dennoch eine Positionsinformation zu ermitteln, die dem Notrufsignal hinzugefügt wird. Es sei angemerkt, dass es durchaus auch denkbar ist, regelmäßig Positionsdaten von einem anderen Fahrzeugsystem zu erhalten und innerhalb des Steuergeräts abzuspeichern, wobei für das Notrufsignal dann, wenn das Steuergerät keine integrierte GPS-Zusatzantenne enthält, die zuletzt empfangene Positionsinformation genutzt werden kann.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Steuergeräts,
- Fig. 2: eine Funktionsskizze des erfindungsgemäßen Steuergeräts, und
- Fig. 3: ein erfindungsgemäßes Kraftfahrzeug.

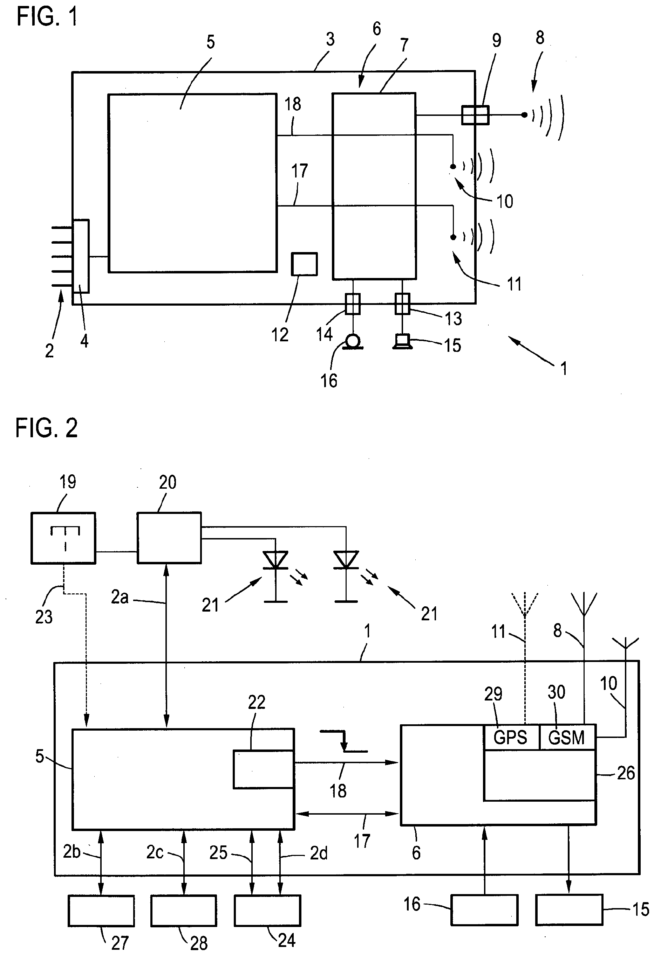

Fig. 1 zeigt eine Prinzipskizze eines erfindungsgemäßen Steuergeräts 1, das hier als ein Vernetzungssteuergerät ausgebildet ist ("Gateway"), mithin auch das Routing zwischen unterschiedlichen Bussystemen 2 des Kraftfahrzeugs, in dem es verbaut ist, steuert. Ein Gehäuse 3 des Steuergeräts 1 weist eine Anschlusseinrichtung 4 für die Bussysteme 2 auf, wobei vorliegend alle zur Kommunikation zwischen unterschiedlichen Fahrzeugsystemen dienenden Fahrzeugbusse 2 an das Steuergerät 1 angeschlossen sind. Innerhalb des Gehäuses 3 ist eine Recheneinheit 5 vorgesehen, die unter anderem den Austausch von Daten zwischen den Bussystemen 2 steuert.

Das Steuergerät 1 erfüllt jedoch auch die Aufgaben einer Online Connectivity Unit - OCU, mithin der Herstellung einer Verbindung zu einem kraftfahrzeugexternen Netzwerk, insbesondere dem Internet, wozu innerhalb des Gehäuses 3 auch eine Kommunikationseinrichtung 6 vorgesehen ist, die vorliegend als ein Telefonmodul 7 ausgebildet ist. Das Telefonmodul 7 kann auch als Mobilfunkmodul oder Network Access Device - NAD bezeichnet werden. Die Recheneinheit 5 ist ferner zur Steuerung des Datenaustauschs zwischen den Bussystemen 2 und dem kraftfahrzeugexternen Netzwerk ausgebildet.

Das Steuergerät 1 kann mithin auch als "Connected Gateway" bezeichnet werden.

In dem Steuergerät 1 ist jedoch auch eine dritte Funktionalität realisiert, nämlich eine Notfallkommunikationsfunktionalität. Die Kommunikationseinrichtung 6 ist mithin ausgebildet, bei Erhalt eines Notfalltriggersignals ein Notrufsignal an das Mobilfunknetz, dort konkret eine Notrufnummer, auszusenden. Die Notrufnummer kann zu einem privaten Callcenter im Fall eines privaten Notrufsystems gehören, aber auch die offizielle Notrufnummer sein.

Der übliche Datenaustausch im Mobilfunknetz und dem kraftfahrzeugexternen Netzwerk erfolgt über eine steuergerätexterne Mobilfunkantenne 8, die beispielsweise im Bereich der Scheibenwurzel einer Frontscheibe angeordnet sein kann. Mit der steuergerätexternen Mobilfunkantenne 8 ist das Steuergerät 1, konkret die Kommunikationseinrichtung 6, über einen Anschluss 9 verbunden.

Nachdem im Notfall gegebenenfalls die Mobilfunkantenne 8 ausfällt bzw. nicht erreichbar sein kann, ist in dem Steuergerät 1 zusätzlich eine Zusatzmobilfunkantenne 10 integriert. An diese werden geringere Qualitätsanforderungen als an die steuergerätexterne Mobilfunkantenne 8 gestellt.

In dem Steuergerät 1 integriert ist ferner eine GPS-Zusatzantenne 11, so dass eine Positionsbestimmung auch durch die Kommunikationseinrichtung 6 erfolgen kann, wenn extern eine Positionsbestimmung nicht möglich ist oder Positionsdaten eines steuergerätexternen Fahrzeugsystems nicht vorliegen.

Um auch anderweitig autark die Notfallkommunikationsfunktionalität wahrnehmen zu können, ist in dem Steuergerät 1 auch eine als Batterie 12 ausgebildete Energiequelle verbaut. Somit kann ein Notrufsignal auch unabhängig von einer externen Energieversorgung ausgesendet werden.

Um auch eine Sprechverbindung mit einer Notrufnummer über das Steuergerät 1 realisieren zu können, weist das Steuergerät 1 ferner Anschlüsse 13, 14 auf, mit denen die Kommunikationseinrichtung 6 mit einem externen Lautsprecher 15 und einem externen Mikrofon 16 verbunden werden können.

Zwischen der Recheneinrichtung 5 und der Kommunikationseinrichtung 6 bestehen zwei Verbindungen, nämlich zum einen eine als Datenverbindung dienende SPI-Verbindung 17, zum anderen als eigene Leitung eine Notfallverbindung 18, über die ein Notfalltriggersignal, das beispielsweise über ein System 2 empfangen worden sein kann, unmittelbar an die Kommunikationseinrichtung 6 weitergeleitet werden kann, um das Aussenden des Notrufsignals und die Herstellung einer Sprechverbindung zu bewirken.

Genaueres zur Einbettung des in Fig. 1 beschriebenen "Connected Gateway" in die Gesamtfunktionalität bezüglich der Notfallkommunikation zeigt Fig. 2.

Demnach kann ein Notfalltriggersignal auf zwei verschiedene Arten erzeugt werden. Zum einen ist im Kraftfahrzeug ein Notfallbedienelement 19 vorgesehen, dessen Betätigung von einem dem Notfallbedienelement zugeordneten Steuergerät 20 detektiert werden kann. Das Steuergerät 20 kann auch entsprechende LEDs 21 ansteuern, die den Status der Notfallkommunikation anzeigen. Über ein erstes Bussystem 2a, beispielsweise einen LIN-Bus oder einen CAN-Bus, gelangt das bei Betätigung des Notfallbedienelements 19 entstehende Notfalltriggersignal in das Steuergerät 1, dort in diesem Ausführungsbeispiel zunächst zur an die Bussysteme 2 angebundenen Recheneinrichtung 5, welche eine Notfallkommunikations-IO-Einheit 22 aufweist, die das Signal über die Notfallverbindung 18 an die Kommunikationseinrichtung 6 weiterliefert. Es sind Ausführungsbeispiele denkbar, bei denen von dem Notfallbedienelement 19 eine hier gestrichelt angedeutete, unmittelbare Signalleitung 23 zu dem Steuergerät 1, konkret der Recheneinrichtung 5, führt.

Eine zweite mögliche Quelle für ein Notfalltriggersignal ist eine Sicherheitsüberwachungseinrichtung 24, die beispielsweise feststellen kann, ob ein Unfall, beispielsweise eine Kollision, vorliegt und/oder ob Sicherheitssysteme ausgelöst worden sind, beispielsweise ein Airbag-System und/oder ein Gurtstraffersystem. Eingangsdaten können gegen Triggerkriterien ausgewertet werden, um zu bestimmen, ob ein Notfalltriggersignal erzeugt wird. Das Notfalltriggersignal kann über ein Bussystem 2d, hier einen FlexRay-Bus, an die Recheneinrichtung 5 und somit die Notfallkommunikations-IO-Einheit 22 übertragen werden; um die Sicherheit weiter zu erhöhen, ist auch eine unmittelbare Kommunikationsverbindung 25 zwischen der Sicherheitsüberwachungseinrichtung 24 und der Recheneinrichtung 5 vorgesehen, vorliegend eine Signalleitung, über die die Kommunikation durch Pulsweitenmodulation erfolgt.

Das Notfalltriggersignal wird in beiden Fällen in der Kommunikationseinrichtung 6 von einer Notfallkommunikationseinheit 26 empfangen, welche zunächst das Notrufsignal zusammenstellt, in dem mehrere Informationen enthalten sind. Diese umfassen nicht nur Daten zur Identifikation des Kraftfahrzeugs, zur momentanen Fahrtrichtung, zum Zeitpunkt des Notfalls und dergleichen, sondern vorliegend auch eine Positionsinformation des Kraftfahrzeugs, eine Türzustandsinformation des Kraftfahrzeugs und weitere Informationen. Diese Informationen können ebenso über Bussysteme 2 und die Recheneinrichtung 5 an die Kommunikationseinrichtung 6 und somit die Notfallkommunikationseinheit 26, die im Übrigen als Softwareapplikation realisiert werden kann, übertragen werden. Beispielhaft ist ein Türsteuergerät 27 gezeigt, welches über das Bussystem 2b, wiederum ein CAN-Bus, Türzustandsinformationen an das Steuergerät 1 liefern kann. Gezeigt ist zudem ein Navigationssystem 28, das über das Bussystem 2c, einen weiteren CAN-Bus, Positionsdaten an das Steuergerät 1 liefern kann. Fällt diese Quelle für Positionsdaten aus, weist das Steuergerät 1 noch die integrierte GPS-Zusatzantenne 11 auf, aus deren Daten in einer Positionsbestimmungseinheit 29 ebenso eine Positionsinformation für das Notrufsignal schlussgefolgert werden kann.

Ist das Notrufsignal zusammengestellt, wird es über eine GSM-Einheit 30, nachdem vorliegend der GSM-Standard für Mobilfunknetze verwendet wird, zum Versenden vorbereitet. Selbstverständlich ist auch die Verwendung anderer Standards, beispielsweise UMTS und/oder LTE denkbar, so dass entsprechend auch eine UMTS-Einheit und/oder eine LTE-Einheit vorliegen kann. Es wird überprüft, ob die Mobilfunkantenne 8, also die steuergerätexterne Mobilfunkantenne, noch erreichbar ist. Ist dies nicht der Fall, wird statt der steuergerätexternen Mobilfunkantenne 8 die in das Steuergerät 1 integrierte Zusatzmobilfunkantenne 10 verwendet. Wird anschließend eine Sprechverbindung hergestellt, werden der Lautsprecher 15 und das Mikrofon 16 eingesetzt.

So ist durch das Steuergerät 1 ein audio- und onlinefähiges Gateway geschaffen, auf dem bei crashsicherem Verbau des Steuergeräts 1 mit hoher Sicherheit und Verlässlichkeit eine Funktion zur Notfallkommunikation ablaufen kann. Dabei werden, wie dargestellt wurde, verschiedene Synergien bei der Fahrzeugarchitektur genutzt, insbesondere die Notfallkommunikationsfunktionalität auf einen zentralen Knotenpunkt in der Kraftfahrzeugkommunikation aufgesetzt, der ohnehin die Kommunikationseinrichtung 6 aufweist.

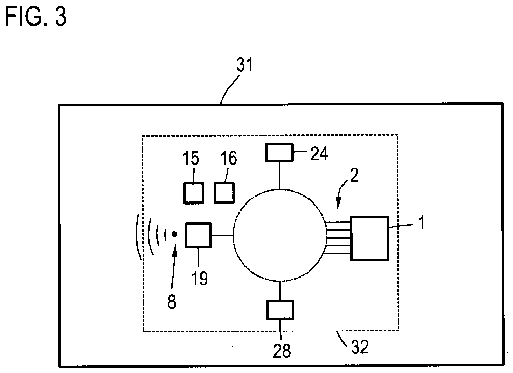

Fig. 3 zeigt schließlich eine Prinzipskizze eines erfindungsgemäßen Kraftfahrzeugs 31. Ein crashsicherer Bereich 32 ist im Bereich der Fahrgastzelle angedeutet. In diesem crashsicheren Bereich 32, unterhalb einer Rücksitzbank angeordnet, ist das Steuergerät 1 verbaut, welches dort insbesondere im Bereich einer Kabelquerung von Kabeltrassen vorgesehen ist, um Zugang zu den Bussystemen 2 zu haben, über die es mit beispielsweise der Sicherheitsüberwachungseinrichtung 24, dem Navigationssystem 28 und dergleichen kommuniziert. Selbstverständlich sind auch weitere Fahrzeugsysteme wie das Türsteuergerät 27 vorgesehen, welche jedoch der Übersichtlichkeit halber in Fig. 3 nicht näher dargestellt sind.

Das Notfallbedienelement 19, welches als SOS-Knopf ausgebildet ist, ist wie der Lautsprecher 15 und das Mikrofon 16 im Bereich des Fahrersitzes angeordnet, um leicht erreichbar zu sein bzw. eine sinnvolle Sprechkommunikation zu ermöglichen. Die steuergerätexterne Mobilfunkantenne 8 ist im Bereich der Scheibenwurzel einer Frontscheibe verbaut.

## Patentansprüche

1. Steuergerät (1) in einem Kraftfahrzeug (31), aufweisend eine Kommunikationseinrichtung (6) zur drahtlosen Kommunikation in einem Mobilfunknetz, eine Anschlusseinrichtung (4) an wenigstens ein Bussystem (2) des Kraftfahrzeugs (31) und eine Recheneinrichtung (5) zur Steuerung des Datenaustauschs zwischen dem wenigstens einen Bussystem (2) und dem Mobilfunknetz und/oder einem über das Mobilfunknetz erreichbaren externen Netzwerk, insbesondere dem Internet,
**dadurch gekennzeichnet,**
**dass** die Kommunikationseinrichtung (6) neben einem Anschluss (9) zu einer steuergerätexternen Mobilfunkantenne (8) eine in dem Steuergerät (1) integrierte, bei Ausfall der steuergerätexternen Mobilfunkantenne (8) zu verwendende Zusatzmobilfunkantenne (10) aufweist und zum Aussenden eines Notrufsignals in das Mobilfunknetz bei Erhalt eines Notfalltriggersignals über das Bussystem (2) und/oder eine sonstige Kommunikationsverbindung (23, 25) ausgebildet ist, wobei das Steuergerät (1) ein Vernetzungssteuergerät mit der Anschlusseinrichtung (4) an mehrere, bevorzugt alle, zur Kommunikation zwischen unterschiedlichen Fahrzeugsystemen vorgesehenen Bussysteme (2) und der zur Steuerung des Austauschs von Daten zwischen den Bussystemen (2) und zwischen den Bussystemen (2) und dem Netzwerk ausgebildeten Recheneinrichtung (5) ist.

2. Steuergerät nach Anspruch 1,
**dadurch gekennzeichnet,**
**dass** das Steuergerät (1) ferner eine bei einem Ausfall einer externen Energieversorgung zu verwendende Energiequelle, insbesondere eine Batterie (12), aufweist.

3. Steuergerät nach Anspruch 1 oder 2,
**dadurch gekennzeichnet,**
**dass** es auch eine insbesondere zusätzlich zu einer weiteren GPS-Antenne des Kraftfahrzeugs (31) vorgesehene, mit der Kommunikationseinrichtung (6) verbundene GPS-Zusatzantenne (11) aufweist.

4. Steuergerät nach einem der vorangehenden Ansprüche,
**dadurch gekennzeichnet,**
**dass** bei einer in dem Steuergerät (1) integrierten GPS-Zusatzantenne (11) und/oder bei über das Bussystem (2) erhaltenen Positionsdaten die Kommunikationseinrichtung (6) zur Ermittlung und Aussendung eines eine Positionsinformation des Kraftfahrzeugs (31) enthaltenden Notrufsignals ausgebildet ist.

5. Steuergerät nach einem der vorangehenden Ansprüche,
**dadurch gekennzeichnet,**
**dass** die Kommunikationseinrichtung (6) einen Anschluss (13, 14) für ein steuergeräteexternes Mikrofon (16) und/oder einen steuergeräteexternen Lautsprecher (15) aufweist und zur Herstellung einer Sprechverbindung mit einer Notrufnummer mit Aussenden des Notrufsignals ausgebildet ist.

6. Steuergerät nach einem der vorangehenden Ansprüche,
**dadurch gekennzeichnet,**
**dass** die Recheneinrichtung (5) und die Kommunikationseinrichtung (6) über eine SPI-Verbindung (17) und/oder eine USB-Verbindung und/oder eine speziell für diesen Zweck vorgesehene Notfallverbindung (18) zur Übertragung eines Notfalltriggersignals an die Kommunikationseinrichtung (6) verbunden sind.

7. Kraftfahrzeug (20), umfassend ein Steuergerät (1) nach einem der vorangehenden Ansprüche, die Mobilfunkantenne (8) und das wenigstens eine Bussystem (2).

8. Kraftfahrzeug nach Anspruch 7,
**dadurch gekennzeichnet,**
**dass** das Steuergerät (1) in einem crashsicheren Bereich (32) des Kraftfahrzeugs (31) angeordnet ist, insbesondere im Bereich der Fahrgastzelle, bevorzugt unterhalb einer Rücksitzbank.

9. Kraftfahrzeug nach Anspruch 7 oder 8,
**dadurch gekennzeichnet,**
**dass** es ein insbesondere von einem Fahrersitz aus erreichbares Notfallbedienelement (19) und/oder eine Sicherheitsüberwachungseinrichtung (24) zur Erzeugung eines Notfalltriggersignals für die Kommunikationseinrichtung (6) aufweist.

10. Kraftfahrzeug nach Anspruch 9,
**dadurch gekennzeichnet,**
**dass** das Notfallbedienelement (19) und/oder die Sicherheitsüberwachungseinrichtung (24) durch eine speziell für diesen Zweck vorgesehene Kommunikationsverbindung (25), insbesondere eine Signalleitung (23), mit dem Steuergerät (1) verbunden ist.

11. Verfahren zur Notfallkommunikation in einem Kraftfahrzeug (31) mit einem Steuergerät (1) nach einem der Ansprüche 1 bis 6, wobei bei Erhalt eines Notfalltriggersignals überprüft wird, ob eine zu dem Steuergerät (1) externe Mobilfunkantenne (8) erreichbar ist, wobei bei nicht erreichbarer externer Mobilfunkantenne (8) die Zusatzmobilfunkantenne (10) zur Übermittlung eines Notrufsignals an eine Notrufnummer verwendet wird.

## Claims

1. Controller (1) in a motor vehicle (31), having a communication device (6) for wireless communication in a mobile-phone network, a connection device (4) to at least one bus system (2) of the motor vehicle (31) and a computing device (5) for controlling the exchange of data between the at least one bus system (2) and the mobile-phone network and/or an external network accessible via the mobile-phone network, in particular the Internet, **characterised in that** the communication device (6) has, apart from a connection (9) to a mobile-phone antenna (8) external to the controller, an additional mobile-phone antenna (10) integrated in the controller (1) that is to be used in the event of failure of the mobile-phone antenna (8) external to the controller and is designed to transmit an emergency call signal into the mobile-phone network in the event of receipt of an emergency trigger signal via the bus system (2) and/or any other communication connection (23, 25), whereby the controller (1) is a networking control unit with the connection device (4) to multiple, preferably all, bus systems (2) provided for communication between different vehicle systems and the computing device (5) designed to control the exchange of data between the bus systems (2) and between the bus systems (2) and the network.

2. Controller according to claim 1, **characterised in that** the controller (1) has furthermore an energy source, in particular a battery (12), for use in the event of a failure of an external energy supply;

3. Controller according to claim 1 or 2, **characterised in that** it has also an additional GPS antenna (11), provided in particular in addition to a further GPS antenna of the motor vehicle (31) and connected with the communication device (6).

4. Controller according to any one of the preceding claims, **characterised in that** in respect of an additional GPS antenna (11) integrated in the controller (1) and/or in respect of position data received via the bus system (2) the communication device (6) is designed to detect and transmit an emergency call signal containing information about the position of the motor vehicle (31).

5. Controller according to any one of the preceding claims, **characterised in that** the communication device (6) has a connection (13, 14) for a microphone (16) external to the controller and/or a loudspeaker (15) external to the controller and is designed to establish a voice connection with an emergency telephone number with transmission of the emergency call signal.

6. Controller according to any one of the preceding claims, **characterised in that** the computing device (5) and the communication device (6) are connected via an SPI connection (17) and/or a USB connection and/or an emergency connection (18) provided specially for this purpose for the transfer of an emergency trigger signal to the communication device (6).

7. Motor vehicle (20), comprising a controller (1) according to one of the preceding claims, the mobile-phone antenna (8) and the at least one bus system (2).

8. Motor vehicle according to claim 7, **characterised in that** the controller (1) is arranged in a crash-safe region (32) of the motor vehicle (31), in particular in the region of the passenger compartment, preferably below a rear seat.

9. Motor vehicle according to claim 7 or 8, **characterised in that** it has an emergency control element (19), accessible in particular from a driver's seat, and/or a safety monitoring device (24) to generate an emergency trigger signal for the communication device (6).

10. Motor vehicle according to claim 9, **characterised in that** the emergency control element (19) and/or the safety monitoring device (24) is connected with the controller (1) by means of a communication connection (25) provided specially for this purpose, in particular a signal line (23).

11. Method for emergency communication in a motor vehicle (31) with a controller (1) according to any one of claims 1 to 6, whereby, in the event of an emergency trigger signal being received, checks are carried out to establish whether a mobile-phone antenna (8) external to the controller (1) is accessible, whereby, in the event of no external mobile-phone antenna (8) being accessible, the additional mobile-phone antenna (10) is used to forward an emergency call signal to an emergency telephone number.

## Revendications

1. Appareil de commande (1) dans un véhicule automobile (31), présentant un dispositif de communication (6) pour la communication sans fil dans un réseau radio mobile, un dispositif de connexion (4) à au moins un système de bus (2) du véhicule automobile (31) et un dispositif informatique (5) pour la commande de l'échange de données entre le au moins un système de bus (2) et le réseau radio mobile et/ou un réseau externe qui peut être atteint via le réseau radio mobile, en particulier Internet,
**caractérisé en ce que** :
le dispositif de communication (6) présente, à côté d'une connexion (9) avec une antenne radio mobile (8) extérieure à l'appareil de commande, une antenne radio mobile d'appoint (10) intégrée à l'appareil de commande (1) à utiliser en cas de panne de l'antenne radio mobile (8) extérieure à l'appareil de commande et est conçu pour l'envoi d'un signal de détresse dans le réseau radio mobile lors de la réception d'un signal de déclenchement d'urgence via le système de bus (2) et/ou une autre liaison de communication (23, 25), dans lequel l'appareil de commande (1) est un appareil de commande de mise en réseau avec le dispositif de connexion (4) sur plusieurs, de présence tous les systèmes de bus (2) prévus pour la communication entre différents systèmes de véhicules et le dispositif informatique (5) conçu pour la commande de l'échange de données entre les systèmes de bus (2) et entre les systèmes de bus (2) et le réseau.

2. Appareil de commande selon la revendication 1,
**caractérisé en ce que** :
l'appareil de commande (1) présente en outre une source d'énergie, de préférence une batterie (12), à utiliser lors d'une panne d'une source d'énergie externe.

3. Appareil de commande selon la revendication 1 ou 2,
**caractérisé en ce que** :
il présente également une antenne d'appoint GPS (11) prévue en particulier en plus d'une autre antenne GPS du véhicule automobile (31) et connectée au dispositif de communication (6).

4. Appareil de commande selon l'une quelconque des revendications précédentes,
**caractérisé en ce que** :
dans le cadre d'une antenne d'appoint GPS (11) intégrée à l'appareil de commande (1) et/ou de données de position reçues via le système de bus (2), le dispositif de communication (6) est conçu pour détecter et envoyer un signal de détresse contenant une information de position du véhicule automobile (31).

5. Appareil de commande selon l'une quelconque des revendications précédentes,
**caractérisé en ce que** :
le dispositif de communication (6) présente une connexion (13, 14) pour un microphone (16) extérieur à l'appareil de commande et/ou un haut-parleur (15) extérieur à l'appareil de commande et est conçu pour élaborer une communication vocale avec un numéro de détresse avec l'envoi du signal de détresse.

6. Appareil de commande selon l'une quelconque des revendications précédentes,
**caractérisé en ce que** :
le dispositif informatique (5) et le dispositif de communication (6) sont connectés via une liaison SPI (17) et/ou une liaison USB et/ou une liaison de détresse (18) prévue spécialement à cet effet pour transmettre un signal de déclenchement d'urgence au dispositif de communication (6).

7. Dispositif automobile (20), comprenant un appareil de commande (1) selon l'une quelconque des revendications précédentes, l'antenne radio mobile (8) et le au moins un système de bus (2).

8. Véhicule automobile selon la revendication 7,
**caractérisé en ce que** :
l'appareil de commande (1) est agencé dans une zone (32) à l'abri des collisions du véhicule automobile (31), en particulier dans la zone du compartiment passagers, de préférence en dessous de la banquette arrière.

9. Véhicule automobile selon la revendication 7 ou 8,
**caractérisé en ce que** :
il présente un élément de commande d'urgence (19) qui peut être atteint en particulier depuis un siège de chauffeur et/ou un dispositif de contrôle de sécurité (24) pour produire un signal de déclenchement d'urgence pour le dispositif de communication (6).

10. Véhicule automobile selon la revendication 9,
**caractérisé en ce que** :
l'élément de commande de détresse (19) et/ou le dispositif de contrôle de sécurité (24) est ou sont connectés à l'appareil de commande (1) par une liaison de communication (25) prévue spécialement à cet effet, en particulier une ligne de signalisation (23).

11. Procédé de communication de détresse dans un véhicule automobile (31) comprenant un appareil de commande (1) selon l'une quelconque des revendications 1 à 6, dans lequel, lors de la réception d'un signal de déclenchement d'urgence, on contrôle si une antenne radio mobile (8) externe à l'appareil de commande (1) peut être atteinte, dans lequel, lorsque l'antenne radio mobile externe (8) ne peut être atteinte, on utilise l'antenne radio mobile d'appoint (10) pour transmettre un signal de détresse à un numéro de détresse.
